## Europäisches Patentamt
## European Patent Office
## Office européen des brevets

(19)

(11) Numéro de publication: **0 105 779**
**B1**

(12)

# FASCICULE DE BREVET EUROPEEN

(45) Date de publication du fascicule du brevet:
**07.01.87**

(51) Int. Cl.⁴: **G 21 C 3/32**, B 23 K 37/02

(21) Numéro de dépôt: **83401815.2**

(22) Date de dépôt: **16.09.83**

---

(54) **Dispositif et procédé de soudage d'éléments de structure d'assemblage de combustible nucléaire.**

---

(30) Priorité: **16.09.82 FR 8215663**

(43) Date de publication de la demande:
**18.04.84 Bulletin 84/16**

(45) Mention de la délivrance du brevet:
**07.01.87 Bulletin 87/2**

(84) Etats contractants désignés:
**BE DE GB IT SE**

(56) Documents cités:
**FR - A - 2 411 469**
**US - A - 2 660 203**
**US - A - 4 110 596**
**US - A - 4 229 642**

(73) Titulaire: **SOCIETE COGEMA, FRAMATOME et URANIUM PECHINEY, 2, rue Paul Dautier, F-78140 Velizy Villacoublay (FR)**

(72) Inventeur: **Vere, Bernard, 2, les Chusets Brie et Angonne, F-38320 Eybens (FR)**
Inventeur: **Biryoukoff, Maura, Allée du Mathias, F-69760 Limonest (FR)**

(74) Mandataire: **Fort, Jacques et al, CABINET PLASSERAUD 84, rue d'Amsterdam, F-75009 Paris (FR)**

## Description

La présente invention concerne le soudage d'éléments de structure en vue de constituer le squelette d'assemblages de combustible pour réacteurs nucléaires.

On sait que de nombreux assemblages de combustible pour réacteurs de puissance, et notamment pour réacteurs à eau légère, comprennent un squelette constitué par une structure rigide formée par un faisceau de tubes guides réunissant deux pièces d'extrémité et sur lesquels sont fixées, à intervalles réguliers, des grilles. Ces grilles supportent et entretoisent des crayons formés chacun par un empilement de pastilles de matériau combustible dans une gaine cylindrique. La majeure partie des tubes guides sont généralement répartis en rangées disposées selon deux directions perpendiculaires. Un assemblage de ce type est décrit par exemple dans le document FR-A-2 049 108.

Le montage du squelette d'un assemblage de combustible doit être conduit de façon à éviter l'apparition de contraintes ou de points faibles, sources de ruptures de soudure. La fixation des tubes guides internes sur les grilles est par ailleurs très peu commode, du fait de la difficulté d'accès dans le faisceau. Par le passé, on a fixé les tubes guides aux grilles par soudage lorsque les matériaux constitutifs des tubes guides et des plaquettes constituant les grilles étaient compatibles. Mais l'exécution à la main de soudures sur les quatre génératrices de chaque tube guide en contact avec des plaquettes représente une opération longue, pénible et de fiabilité incertaine du fait des difficultés de mise en place correcte de l'outillage de soudage.

L'invention vise à fournir un procédé et un dispositif de fixation par soudage de tubes guides sur d'autres éléments de structure qui les relient, par exemple sur des grilles, répondant mieux que ceux antérieurement connus aux exigences de la pratique. Elle vise notamment à permettre un soudage électrique automatique rapide et sûr.

Dans ce but, l'invention propose notamment un dispositif de soudage comprenant: un bâti destiné à recevoir l'ensemble constitué par les tubes guides et les éléments de structure et à les maintenir dans la disposition où ils doivent être soudés; au moins un ensemble de soudage comportant un chariot muni de moyens permettant de le déplacer sur le bâti parallèlement aux tubes guides et comportant au moins une pince de soudage montée sur le chariot par l'intermédiaire de moyens permettant d'une part, de la déplacer transversalement par rapport aux tubes guides, d'autre part, de la faire tourner autour d'un axe parallèle à ce déplacement transverse entre une orientation dans laquelle la pince peut passer entre deux rangées adjacentes de tubes et une orientation dans laquelle elle vient enserrer un tube à l'emplacement d'une soudure à effectuer; et des moyens permettant d'appliquer aux pinces des impulsions électriques de soudage.

Dans le cas général où les tubes sont répartis en rangées suivant deux directions perpendiculaires, chaque chariot portera avantageusement une pince par l'intermédiaire d'une table à déplacements croisés suivant ces deux directions perpendiculaires. Les moyens d'orientation de la pince pourront être prévus pour amener celle-ci, à partir de l'orientation de passage, dans deux orientations opposées permettant d'intervenir successivement sur deux tubes sans déplacement de la pince en translation.

Il sera avantageux, pour diminuer les temps de fabrication d'un squelette, de prévoir plusieurs ensembles de soudage. Dans le cas de tubes répartis suivant deux directions perpendiculaires, quatre ensembles deux à deux opposés seront avantageusement prévus et disposés à 90° l'un de l'autre, afin de souder les tubes suivant deux jeux de génératrices également orthogonales.

La pression exercée par la pince de soudage sur un tube guide risque de le déformer. Pour éviter ce risque, le dispositif de soudage suivant l'invention peut être complété par des moyens permettant de placer dans les tubes guides, au niveau des éléments de structure, des mandrins et de les amener au contact de la paroi des tubes guides par expansion radiale de façon à renforcer localement le tube guide.

Suivant un autre aspect de l'invention, celle-ci propose un procédé de soudage de tubes guides d'assemblage de combustible nucléaire sur des éléments de structure répartis le long des tubes guides, suivant lequel on monte l'ensemble des tubes guides et des éléments de structure, préassemblés par un outillage sur un bâti; on déplace au moins une pince transversalement par rapport aux tubes guide en la maintenant dans une orientation pour laquelle elle peut passer entre deux tubes guides adjacents; on fait tourner la pince autour d'un axe parallèle à ce déplacement transverse pour l'amener en prise sur le tube guide à l'endroit d'une soudure à effectuer; on ferme la pince et on y envoie une impulsion électrique de soudage; on fait tourner la pince pour la ramener dans son orientation primitive et on recommence la séquence sur un autre tube guide.

Le procédé et le dispositif qui viennent d'être définis apportent de nombreux avantages par rapport aux solutions antérieures. On peut fixer, en une seule séquence de déplacement de la pince ou des pinces, la totalité des tubes guides du squelette sur un élément de structure; tous les tubes guides et les éléments de structure associés restent dans une position fixe au cours du soudage, le risque de déplacement intempestif est écarté, l'ensemble des opérations peut aisément être automatisé et une surveillance permanente peut être effectuée.

L'invention sera mieux comprise à la lecture de la description qui suit de modes particuliers de réalisation de l'invention, donnés à titres d'exemples non limitatifs. La description se réfère aux dessins qui l'accompagnent, dans lesquels:

– la figure 1 est un schéma de principe en élévation montrant un fragment de grille sur lequel est fixé un tube guide,

– la figure 2 est une vue schématique en élévation montrant un banc de montage destiné au pré-assemblage des pièces de structure d'un assemblage combustible,

– la figure 3 est une vue en bout du bâti d'un dispositif suivant l'invention portant un squelette d'assemblage après pré-assemblage,

– la figure 4 est une vue en bout montrant l'équipement mobile de soudage encadrant le squelette monté sur son bâti de réception,

– la figure 5 est une vue en coupe longitudinale d'une pince de soudage utilisable dans l'équipement de la figure 4,

– la figure 6 est un schéma montrant la partie terminale de la pince, en coupe suivant la ligne VI–VI de la figure 5;

– la figure 7 est une vue de détail montrant une variante de la pince de soudage en coupe axiale,

– la figure 8 est une vue, en élévation et en coupe partielle, d'un équipement d'introduction de mandrins expansibles à l'intérieur des tubes guides,

– la figure 9, similaire à la figure 8, montre une variante de réalisation ne comportant pas de flexibles,

– les figures 10A et 10B montrent, respectivement en coupe suivant l'axe et depuis la droite, la partie terminale d'un mandrin expansible utilisable dans l'équipement de la figure 8,

– la figure 11, qui correspond à un fragment de la figure 4, montre la disposition des tubes guides à souder et les repères permettant de définir la séquence de soudage.

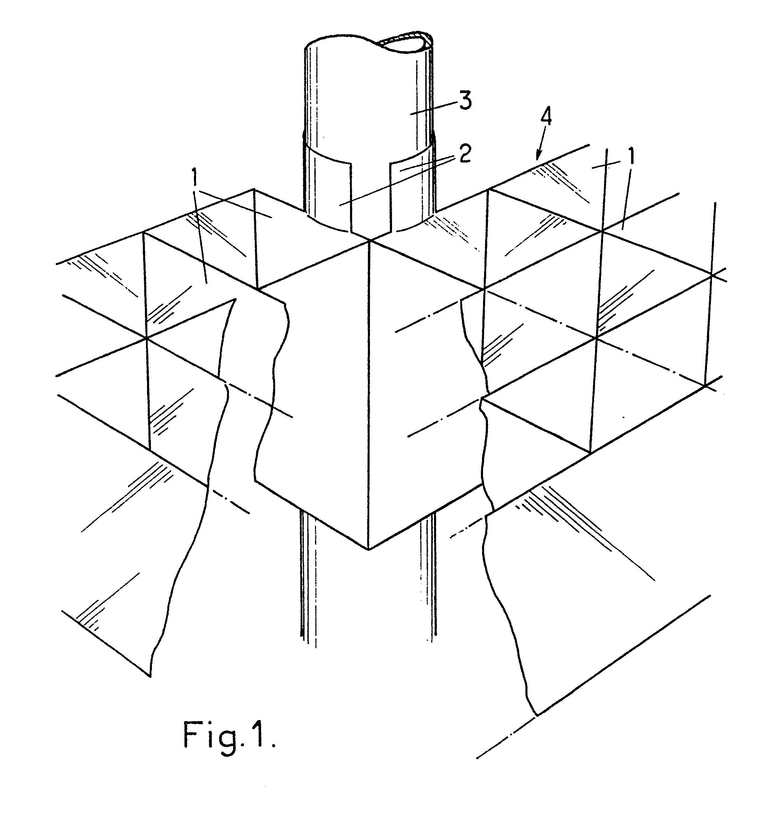

Le dispositif qui sera maintenant décrit, à titre d'exemple particulier de réalisation, est destiné à solidariser les tubes guides d'un assemblage de combustible nucléaire et des grilles munies à cet effet de languettes. La figure 1 montre un fragment de la grille 4, constituée de plaquettes 1 prolongées par des languettes 2 qui s'appliquent sur un tube guide 3. Le tube guide et les plaquettes sont généralement en un des alliages à base de zirconium appelés «zircaloy».

L'opération de soudage proprement dite, destinée à constituer le squelette de l'assemblage, est précédée par un pré-assemblage des pièces de structure afin de les placer dans la disposition où elles seront ultérieurement soudées.

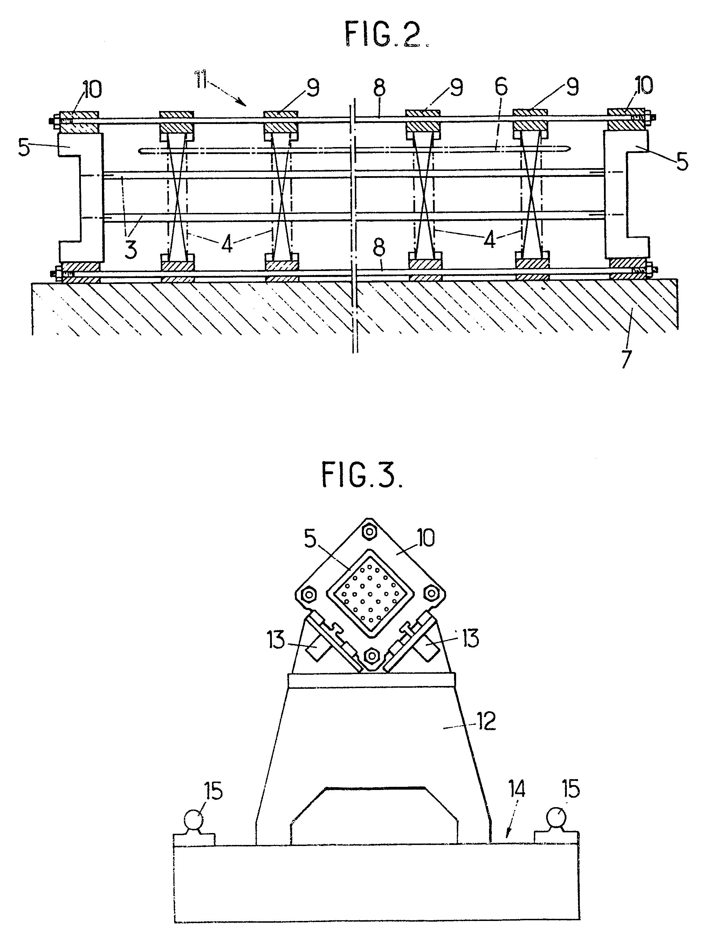

La figure 2 montre schématiquement un banc de montage 7 sur lequel peut s'effectuer le pré-assemblage. Ce banc 7 comporte un support de réception d'un outillage de pré-positionnement 11 formé par des brides mobiles basculantes 9 et 10, reliées par des tiges entretoises 8. Les grilles 4, les tubes guides 3 et les pièces d'extrémité 5 auxquelles sont provisoirement fixés, pour la fabrication, les tubes guides 3, sont mis en place dans l'outillage 11. La longueur des tiges entretoises 8 est telle que les brides 10 soient au niveau des pièces d'extrémité 5 tandis que les brides 9, au nombre de quatre dans le mode de réalisation illustré, sont au niveau des grilles 4. Ainsi, les grilles 4 et les pièces d'extrémité 5 peuvent être enserrées par les brides de l'outillage 11 de façon à constituer un ensemble manutentionable en bloc.

A titre illustratif, l'emplacement d'un crayon de combustible 6 a été représenté en traits mixtes sur la figure 2, mais dans la réalité les crayons 6 ne sont mis en place dans les grilles qu'une fois celles-ci soudées sur les tubes guides 3.

Le dispositif suivant l'invention comporte, dans le mode de réalisation particulier qui sera maintenant décrit, un bâti 12, montré en figure 3, destiné à recevoir l'ensemble constitué par le squelette de l'assemblage et son outillage de positionnement. Le bâti porte des vérins de bridage 13 permettant de fixer sur le bâti, de façon rigide, au moins une des brides 10 de l'outillage. Le dispositif comprend de plus un sommier 14, formé par exemple par un ensemble mécano-soudé, muni de rails de guidage 15. Le bâti 12 est fixé sur le sommier dans une orientation telle que les rails de guidage 15 soient parallèles aux tubes guides d'un squelette porté par le bâti.

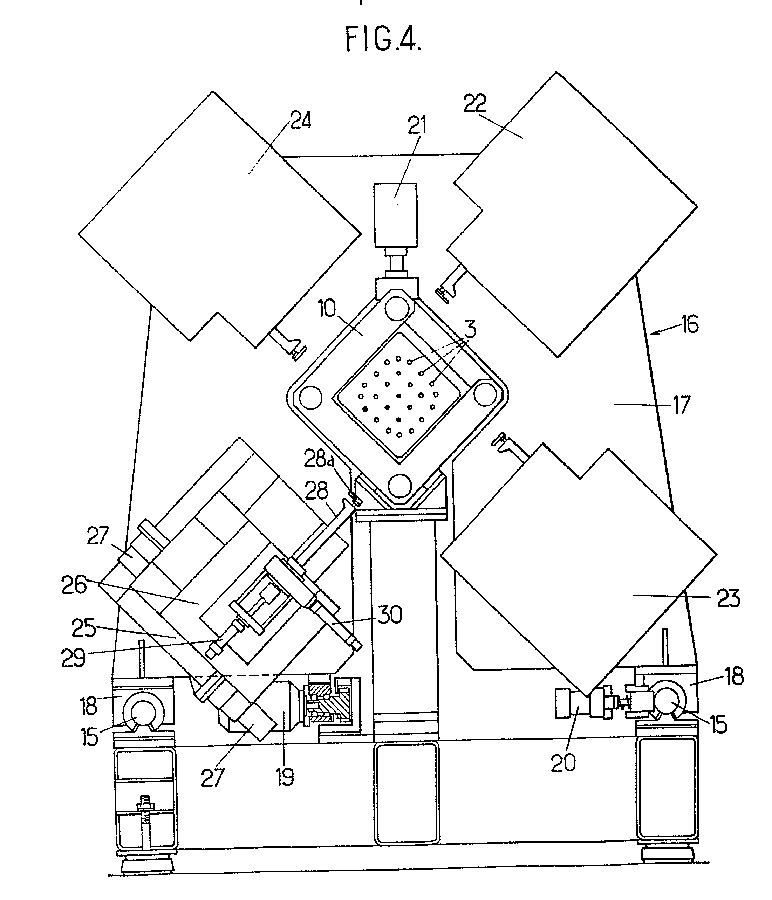

Le dispositif comporte encore un équipement mobile de soudage 16, représenté dans son ensemble en figure 4. Cet équipement comporte un chariot 17, qui sera généralement un ensemble mécano-soudé, muni de paliers 18 de guidage sur les rails 15, sur lequel sont placés quatre ensemble de soudage 22, 23, 24 et 25. Les trois premiers ne sont représentés sur la figure 4 que par leur encombrement, pour plus de simplicité.

Le chariot 17 est muni de moyens permettant de le déplacer sur les rails 15 le long du bâti 12, constitués par un moteur 19 d'entraînement d'un pignon qui engrène une crémaillère portée par le bâti 12. Le chariot 17 porte de plus des moyens permettant de l'immobiliser de façon précise et sûre aux emplacements de travail des ensembles de soudage 22–25. Dans le cas illustré en figure 4, ces moyens d'immobilisation sont constitués par un vérin 20 porté par le chariot et capable d'appliquer un patin de freinage sur l'un des rails 15. Pour permettre d'ajuster sa position avant soudage, le chariot 17 est muni de moyens de mesure, qui peuvent comporter une règle fixe solidaire du bâti 12 (non représenté) et des moyens de détection, par exemple magnétiques, également non représentés. Le chariot 17 est équipé de moyens de centrage, constitués, dans le mode de réalisation illustré, par un vérin 21.

Les quatre ensembles de soudage 22–25 ont la même constitution. L'ensemble 25 montré en figure 4 comprend une table 26 à mouvements croisés permettant de déplacer une pince de soudage 28 suivant deux directions X et Y, dont la constitution peut être classique. Les déplacements sont par exemple assurés par des moteurs pas-à-pas 27. La pince de soudage par points 28, qui sera décrite en détail plus loin, est munie d'un vérin 29 permettent de serrer les mâchoires de la pince et muni d'un capteur de détection d'effort, et d'un vérin double 30 de rotation de la pince permettant de donner à la tête 28a de la pince trois orientations à 120° l'une de l'autre. Un détecteur incorporé à la pince, avantageusement de type magnétique, peut être prévu pour vérifier la venue de la pince dans ses orientations prédéterminées.

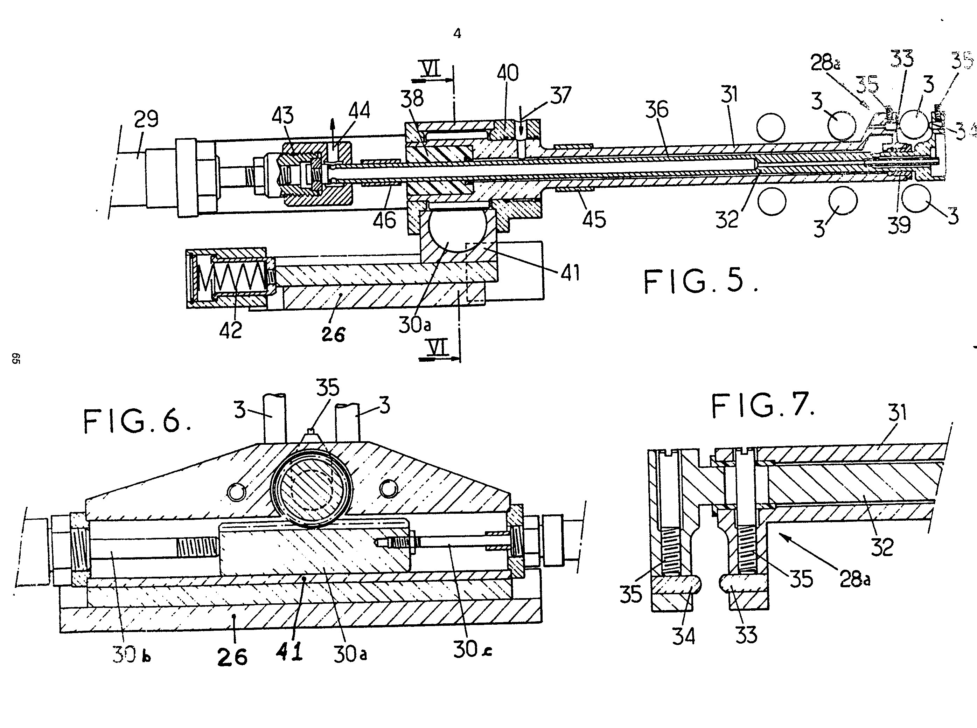

On peut utiliser des pinces de soudage par points de nombreux types différents. La pince montrée à titre d'exemple en Figures 5 et 6 est à refroidissement par eau et permet une cadence de soudage élevée. Cette pince 28 peut être regardée comme ayant une tige, de dimension transversale suffisamment faible pour pouvoir passer entre deux rangées adjacentes de tubes guides 3, et une tête 28a, de largeur également assez faible pour qu'elle puisse passer entre deux rangées de tubes guides, à condition qu'elle soit dans une orientation convenable. La pince comprend deux bras tubulaires 31 et 32 coaxiaux, dont les extrémités renflées constituent la tête et portent des électrodes démontables 33 et 34, fixées par des moyens appropriés quelconques, tels que des vis 35.

L'espace annulaire 36 entre les bras 31 et 32, des trous radiaux ménagés dans le bras 32 au niveau de la tête, et l'alésage central du bras 32 constituent un circuit de refroidissement qui peut être relié, par l'intermédiaire de trous 37 et 44 prévus dans des manchons de raccordement 40, 44 et de flexibles (non représentés), à un circuit d'alimentation en eau, non représenté. Les bras tubulaires servent à l'alimentation électrique des électrodes et doivent donc être isolés l'un de l'autre. Dans ce but, on constitue les paliers de centrage 38 et 39 des bras en matériau isolant.

Le bras externe 31 est libre en rotation dans le manchon 40, mais retenu en translation par lui. Pour permettre au bras externe 31 de se déplacer axialement lors du serrage et du desserrage de la pince, le manchon 40 n'est pas fixé directement sur la table 26, mais porté par une glissière 41 pouvant coulisser sur la table 26. Une butée élastique 42 tend à ramener le bras externe 31 dans une position de repos, représentée en Figure 5. La glissière 41 contient le vérin double 30 d'orientation de la pince, comme on le verra plus loin.

Le corps du vérin pneumatique de serrage 29 est relié au manchon 40 par de tirants (Figure 4). La tige de son piston est fixée au bras interne 32 par l'intermédiaire d'un connecteur de raccordement comportant le manchon 43 et permettant de remplacer la pince. Les bras 31 et 32 sont munis de pièces de raccordement électriques 45 et 46 permettant d'appliquer aux électrodes des impulsions de courant, à partir d'une source électrique extérieure non représentée. Sur la Figure 5, le pince 28 est représentée en position de soudage sur un tube guide 3. Cette tête a une forme lui permettant de basculer d'une position où elle passe entre deux rangées adjacentes (Figure 6) à une position où elle encadre un tube guide sans être gênée par les tubes guides voisins (Figure 5).

On reviendra plus loin sur la séquence de fonctionnement du dispositif. D'ores et déjà, on peut toutefois noter que le serrage de la pince s'effectue de la façon suivante: le vérin 29 déplace le bras interne 32 jusqu'à ce que l'électrode 34 vienne au contact de la languette 2, déjà au contact du tube guide 3. Du fait que le manchon 40 lié en translation au bras externe 31 est flottant car la glissière 41 peut coulisser sur la table 26, une contre-réaction à l'effort de traction appliqué par le piston du vérin 29 au bras interne 32 se développe; grâce à la butée élastique 42, le bras 31 peut se déplacer en sens contraire du bras 32 jusqu'à ce que l'électrode 33 soit au contact de la languette 2 diamétralement opposée à la languette 2 au contact de l'électrode 34.

La présence de la butée élastique 42 permet donc d'obtenir un effort de serrage identique (de l'ordre de 15 kg en général) sur les génératrices diamétralement opposées du tube guide devant recevoir un point de soudure de liaison avec les languettes 2.

Sur la Figure 6, le mode d'entraînement en rotation de la tige et de la tête de la pince 28 apparaît plus clairement. Les tiges 30b et 30c des deux vérins montés sur le glissière 41 (qui peuvent être remplacés par un vérin à double effet) entraînent une crémaillère 30a qui engrène une roue dentée fixée de façon rigide au bras 31. La course de la crémaillère est telle qu'elle puisse faire tourner le bras 32, ainsi que le bras 31 qui en est solidarisé en rotation, sur 120° à partir de la position médiane montrée en figure 6, pour amener la tête dans la position de travail montrée en figure 5.

Etant donné que les tubes guides présentent une épaisseur faible, il est souhaitable de les soutenir lors de l'opération de soudage pour éviter leur déformation sous la pression des électrodes. Une solution simple consiste à introduire, dans les tubes guides en cours de soudage, des mandrins de retenue.

La figure 7 représente une variante de pince de soudage sans refroidissement par eau. Les mêmes références sont utilisées et l'on aperçoit que seul le mode de fixation des électrodes diffère. En effet, la fixation des électrodes s'effectue à l'aide de vis 35 traversant un alésage fileté dans toute l'épaisseur de la pièce. Cette variante permet un gain de dimensionnement, car les vis ne débordent pas et une plus grande sécurité de vissage, du fait d'une plus grande portée des filetages.

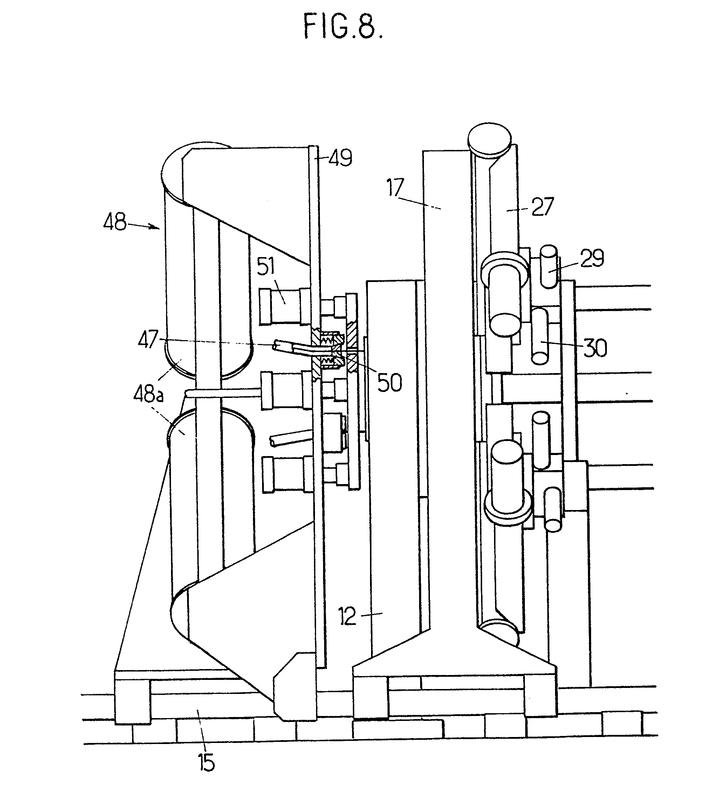

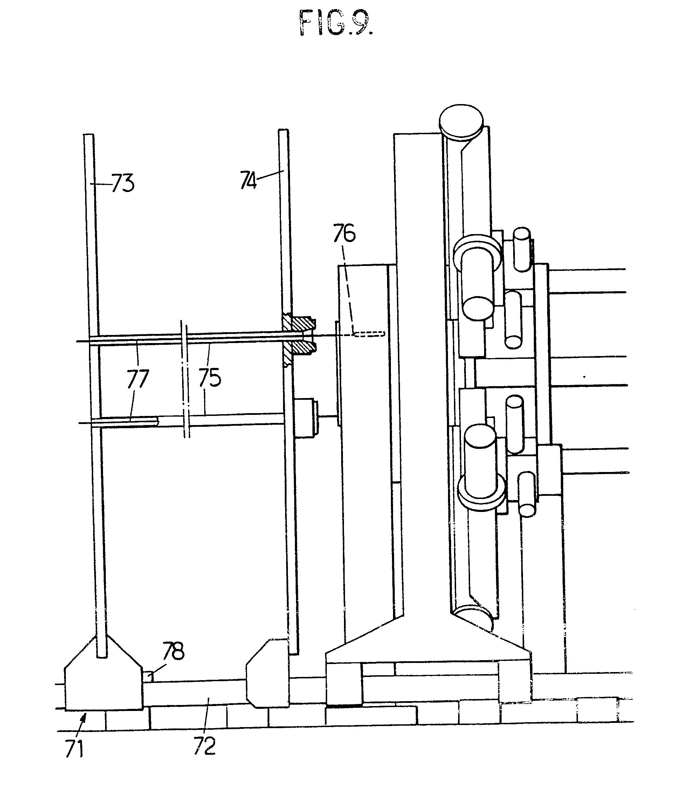

Les figures 8 et 9 montrent des équipements permettant d'introduire dans les tubes guides des mandrins expansibles, de les placer au droit des grilles, c'est-à-dire aux emplacements de soudage, puis de les appliquer contre les tubes. Ces mandrins permettent non seulement d'éviter la déformation des tubes guides, mais aussi d'éviter des déséquilibres thermiques entre les deux points de soudage opposés.

Dans les modes de réalisation représentés, l'équipement d'introduction des mandrins constitue un ensemble autonome. Dans le cas de la figure 8, il est porté par un chariot 49 se déplaçant sur les rails de guidage 15 du sommier 14. Ce chariot 49 et le chariot 17 portant l'ensemble de soudage seront situés, sur le bâti 12, de part et d'autre de la pièce d'extrémité supportant l'outillage de positonnement 11. Le chariot 49 est muni de moyens d'entraînement et d'immobilisation (non représentés) qui peuvent être similaires à ceux du chariot 17.

Dans le mode de réalisation montré en figure 8, les mandrins sont mis en place à l'aide de plusieurs flexibles 47 stockés sur un enrouleur multiple 48 porté par le chariot 49. L'enrouleur 38 se compose de plusieurs tambours 48a tournant autour d'axes parallèles, entraînés en rotation par un motoréducteur par l'intermédiaire d'une pignonnerie de synchronisation à renvois d'angles, qui peut être d'un type classique quelconque.

L'avance pas-à-pas des flexibles et des mandrins peut être commandée par des pinces 50 munies d'un mécanisme de commande de serrage et d'avance à vérins 51 permettant à chaque pince de serrer le flexible, de l'avancer d'un pas, de relâcher le flexible et de revenir à sa position de départ.

Le nombre de flexibles est le même que celui des tubes guides, vingt-quatre par exemple. Il peut se faire qu'un des tubes guides (ou plusieurs) ne soit accessible qu'à partir de la pièce d'extrémité opposée à celle où se trouve le chariot 49. Dans ce cas, le dispositif de commande de mandrin correspondant devra être placé à l'opposé du chariot 49 sur le bâti 12.

Dans la variante montrée en figure 9, les mandrins sont mis en place par des tiges creuses 75. Le mécanisme d'entraînement de ces tiges creuses comporte un chariot 71 muni d'un moteur d'entraînement (non représenté) permettant de la déplacer sur un chemin 72 parallèle aux rails 15. Le chariot 17 porte deux plaques tubulaires 73 et 74, dont les trous ont la même répartition que ceux d'une pièce d'extrémité 5 de l'assemblage. Sur ces plaques sont fixées des tiges creuses et rigides 75 en nombre égal à celui des tubes guides. Chaque tige 75 porte, à son extrémité 76, un mandrin expansible.

Le chariot 74 doit être muni d'un dispositif de repérage 78 permettant de déterminer de façon précise l'emplacement des mandrins et de les placer au droit des grilles à souder.

L'expansion des mandrins au droit des grilles peut être assurée par un dispositif de commande centrale, désigné par 77 sur la figure 9 et non représenté en figure 8.

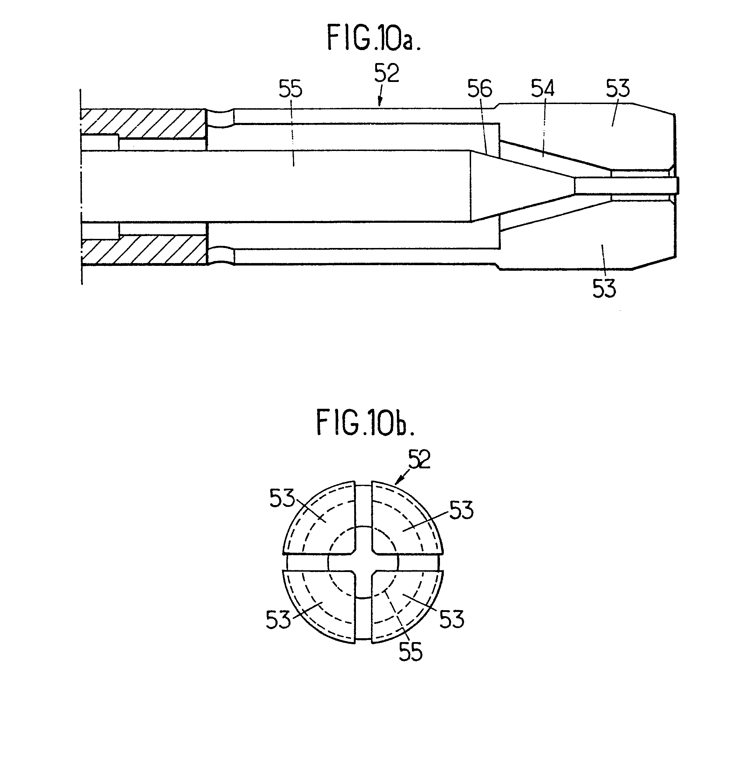

Les mandrins expansibles peuvent avoir des constitutions très diverses. Dans le cas illustré en figures 10B et 10B, ce mandrin 52 est constitué par un tube fendu axialement pour constituer plusieurs doigts élastiques 53, également répartis angulairement, un nombre de quatre en général. Les doigts délimitent une surface interne 54 qui s'évase vers l'arrière. Une tige centrale 55, dont la partie terminale a un profil 56 complémentaire de celui des doigts, est munie à son extrémité éloignée de moyens permettant de l'avancer vers les doigts 53 afin d'écarter ces derniers et de les amener au contact du tube guide lorsque les doigts sont au droit de la pince de soudage. Pour que le mandrin 52 assure un maintien mécanique satisfaisant et un bon contact électrique, la surface externe des doigts 54 est usinée de façon qu'elle se place sur un même cercle correspondant au canal interne du tube guide lorsque le mandrin est expansé. Ce mode de constitution du mandrin lui permet au surplus de passer plus facilement au droit des grilles, du fait de l'encombrement radial réduit.

Les moyens destinés à renforcer les tubes guides lors du soudage peuvent avoir des constitutions très différentes de celles qui ont été décrites en faisant référence aux figures 7 à 10B. On peut notamment utiliser une commande hydraulique, pneumatique ou mécanique, voire même électrique. Les mandrins peuvent avoir une forme distincte de celle envisagé plus haut. Ils peuvent comporter une bague en matériau électriquement conducteur constituant électrode intermédiaire. Enfin, on peut utiliser, au lieu d'un mandrin expensible assurant un maintien localisé, au droit d'une grille, un tube unique comportant plusieurs zones expansibles réparties suivant une disposition reproduisant celle des grilles, maintenu en place dans un tube guide tout au long de l'opération de soudage de la totalité des grilles.

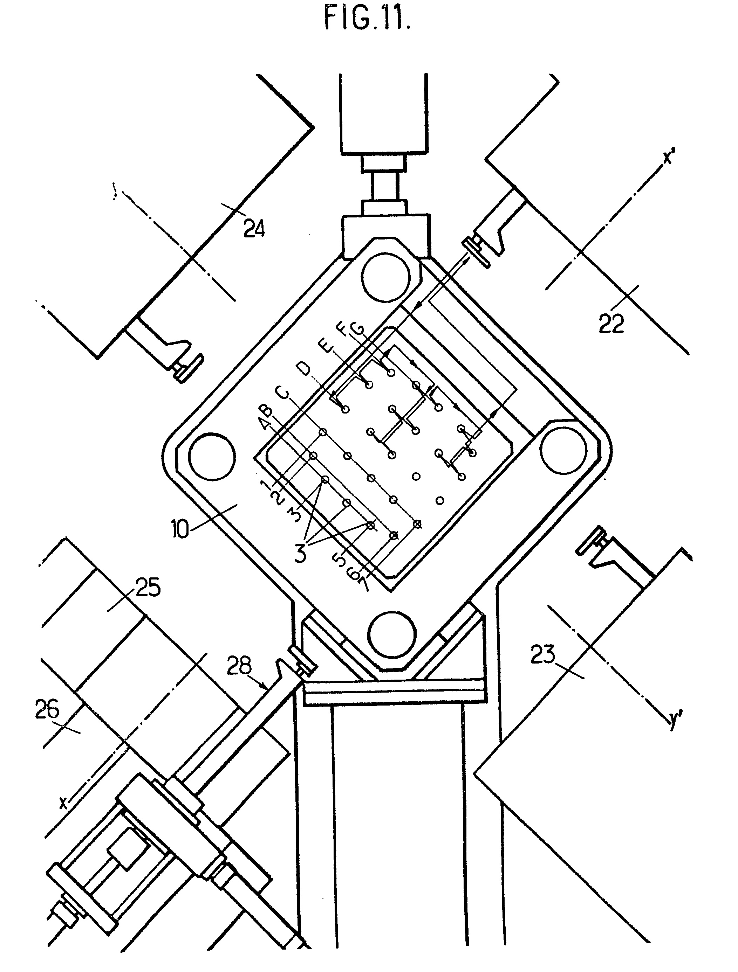

On décrira maintenant, en faisant référence à la figure 11, les opérations successives lors d'une séquence complète de soudage de l'ensemble des tubes guides sur une grille donnée à titre d'exemple.

On supposera que, initialement, le squelette préassemblé dans l'outillage est en place sur le bâti 12, que les mandrins ont été introduits dans les tubes guides et placés au droit de la grille à souder, que le chariot 17 a été amené en position de travail sur la grille, les pinces 28 étant rétractées aux emplacements indiqués sur la figure 11. Cette disposition est celle montrée en figure 11.

La séquence peut alors être la suivante:

(a) les quatre pinces 28 sont placées, à l'aide des vérins 30, dans l'orientation d'introduction dans le réseau de tubes guides (tête parallèle à l'axe des tubes guides).

(b) Les moteurs des tables à mouvements croisés 26 sont actionnés pour amener les pinces 28 à la hauteur des premiers tubes guides à souder. Sur la figure 11, les pinces des ensembles 22, 23, 24 et 25 sont glissées parallèlement aux rangées de tubes guides, à l'extérieur du faisceau, pour venir au droit des tubes guides situés en D1, G4, A4 et D7, respecitvement, dans une orientation qui est celle montrée en figure 6.

(c) Toutes les pinces sont basculées de 120° vers la gauche, ce qui amène les électrodes des pinces sur les languettes situées dans la direction XX' pour les tubes D1 et D7, selon YY' pour les tubes situés en G4 et A4.

(d) Les vérins 29 sont actionnés pour amener les électrodes 33 et 34 au contact des languettes.

(e) Le générateur d'impulsions (non représenté) est actionné de façon à fournir des impulsions de courant dont la tension, l'intensité et la durée ont été préalablement déterminées par soudage d'éprouvettes.

(f) Les quatre pinces 28 sont basculées en arrière de 120° pour les ramener dans leur position d'introduction.

(g) Les quatre pinces sont déplacées de fçon à les faire avancer d'un pas vers le tube guide suivant: les pinces des ensembles 22, 23, 24 et 25 viennent ainsi respectivement face aux tubes guides situés en E1, G5, A3 et C7.

(h) Les séquences (c), (d), (e) et (f) sont répétées.

Après nouvelle avance, cette fois d'un demipas, les opérations (c), (d), (e) et (f) sont répétées pour souder les tubes guides situés aux angles.

Ces opérations, effectuées sur les tubes guides placés à la périphérie du faisceau, doivent être complétées par le soudage des tubes disposés à l'intérieur du faisceau: les successions d'opérations sont encore similaires, si ce n'est que la pince, une fois introduite, peut être basculée alternativement d'un côté puis de l'autre lorsque les tubes guides placés des deux côtés de sa position d'introduction sont à souder.

Plutôt que d'exposer la séquence complète d'opérations, on a indiqué schématiquement sur la figure 11, par un trajet fléché, les interventions de la pince de l'ensemble de soudage 22, étant bien entendu que d'autres trajets sont possibles.

La mise en œuvre du dispositif peut s'effectuer de façon complètement automatique, sous la commande d'un programme enregistré. Il n'est pas nécessaire de décrire ici la structure du système de commande numérique requis, non plus que le logiciel, étant donné qu'ils découlent immédiatement des opérations à effectuer et des tests destinés à n'autoriser le passage à une opération qu'une fois la précédente exécutée.

**Revendications**

1. Dispositif de soudage de tubes guides d'un assemblage de combustible sur des éléments de structure répartis le long des tubes guides, caractérisé en ce qu'il comprend: un bâti (12) destiné à recevoir l'ensemble constitué par les tubes guides (3) et les éléments de structure (4) et à les maintenir dans la disposition où ils doivent être soudés; au moins un ensemble de soudage (22-25) comportant un chariot (17) muni de moyens permettant de le déplacer sur le bâti parallèlement aux tubes guides et comportant au moins une pince de soudage (28) montée sur le chariot par l'intermédiaire de moyens permettant, d'une part, de la déplacer transversalement par rapport aux tubes guides, d'autre part, de la faire tourner autour d'un axe parallèle à ce déplacement transverse entre une orientation dans laquelle la pince peut passer entre deux rangées adjacentes de tubes guides et une orientation dans laquelle elle vient enserrer un tube à l'amplacement de soudure à effectuer; et des moyens permettant d'appliquer aux pinces des impulsions électriques de soudage.

2. Dispositif selon la revendication 1, de soudage de tubes guides répartis en rangées suivant deux directions perpendiculaires, caractérisé en ce que chaque pince de soudage (28) est portée par son chariot par l'intermédiaire d'une table (26) à déplacements croisés suivant la direction des rangées.

3. Dispositif selon la revendication 2, caractérisé en ce qu'il comporte quatre pinces de soudage (28) portées par un méme chariot (17) par

l'intermédiaire de tables à déplacement croisés respectives.

4. Dispositif selon l'une quelconque des revendications précédentes, caractérisé en ce que les moyens pour faire tourner la pince de soudage (28) sont prévus pour amener cette dernière, à partir de l'orientation de passage entre rangées adjacentes, dans deux orientations symétriques permettant de souder deux tubes guides sans déplacement de la pince en translation.

5. Dispositif selon l'une quelconque des revendications précédentes, caractérisé en ce qu'il comprend, de plus, des moyens pour introduire, dans les tubes guides (3), des mandrins expansibles au moins localement pour supporter le tube guide aux emplacements de soudage.

6. Dispositif selon la revendication 5, caractérisé en ce que les moyens associés aux mandrins comportent des flexibles (47) ou des tiges (77) de déplacement des mandrins le long des tubes guides et des moyens d'avance pas-à-pas des flexibles ou tiges.

7. Dispositif selon l'une quelconque des revendications précédentes, caractérisé en ce qu'il comprend, de plus, un banc (7) de réception d'un outillage de pré-positionnement (11) des tubes guides et éléments de structure, outillage comportant des brides mobiles basculantes (9, 10) reliées par les tiges entretoises (8) de façon à constituer un ensemble transportable en bloc sur le bâti (12).

8. Dispositif selon l'une quelconque des revendications précédentes, caractérisé en ce que la pince, ou chaque pince, de soudage (28) comporte deux bras tubulaires coaxiaux (31, 32) munis d'électrodes respectives (34, 33) placées face à face, l'un des bras étant monté sur le chariot par l'intermédiaire de moyens à rappel élastique lui permettant de se déplacer axialement à partir d'une position de repos, et des moyens (29) pour déplacer axialement les bras l'un par rapport à l'autre et appliquer les électrodes de façon équilibrée sur le tube.

9. Procédé de soudage de tubes guides (3) d'assemblage de combustible nucléaire sur des éléments de structure (4) répartis le long du tube guide, caractérisé en ce que l'on monte l'ensemble des tubes guides et des éléments de structure, pré-assemblé par un outillage, sur un bâti (12); que l'on déplace au moins une pince transversalement par rapport aux tubes guide en la maintenant dans une orientation pour laquelle, elle peut passer entre deux tubes guides adjacents; que l'on fait tourner la pince autour d'un axe parallèle à ce déplacement transverse pour l'amener en prise sur le tube guide à l'endroit d'une soudure à effectuer; que l'on ferme le pince et que l'on y envoie une impulsion électrique de soudage; que l'on fait tourner la pince pour la ramener dans son orientation primitive et que l'on recommence la séquence sur un autre tube guide.

**Patentansprüche**

1. Vorrichtung zum Schweissen von Führungsrohren einer Anordnung von Brennstäben und Strukturelementen, welche sich längs der Führungsrohre erstrecken, gekennzeichnet durch ein Gestell zur Aufnahme der durch die Führungsrohre (3) und die Strukturlemente (4) gebildeten Anordnungen zur Festlegung in der gewünschten Schweissposition; wenigstens eine Schweissanordnung (22 bis 25) umfassend einen Schlitten (17), der mit Einrichtungen zur Längsverlagerung längs der Führungsrohre auf dem Gestell versehen ist und wenigstens eine Schweisszange (28) trägt, welche auf dem Schlitten mittels derartiger Einrichtungen befestigt ist, die eine Transversalbewegung bezüglich der Führungsrohre einerseits gestatten, und die andererseits eine Schwenkbewegung um eine Achse parallel zu dieser Querbewegung ermöglichen, und zwar zwischen einer Ausrichtung, in der die Zange zwischen zwei benachbarten Reihen von Führungsrohren passieren kann, und einer Ausrichtung, in welcher sie ein in Schweissposition angeordnetes Führungsrohr umgibt; und durch Einrichtungen zum Anlegen elektrischer Schweissimpulse an die Schweisszange.

2. Vorrichtung nach Anspruch 1 zum Schweissen von in zwei senkrecht zueinander stehenden Richtungen angeordneten Führungsrohren, dadurch gekennzeichnet, dass jede Schweisszange (28) auf ihrem Schlitten mittels eines Kreuztisches (26) entsprechend den zueinander senkrechten Richtungen der Anordnung befestigt ist.

3. Vorrichtung nach Anspruch 2, dadurch gekennzeichnet, dass sie vier Schweisszangen (28) umfasst, welche durch den gleichen Schlitten (17) mittels eines Kreuztisches getragen werden.

4. Vorrichtung nach einem der vorhergehenden Ansprüche, dadurch gekennzeichnet, dass die Einrichtungen für die Schwenkbewegung der Schweisszange (28) derart ausgelegt sind, dass diese ausgehend von einer Ausrichtung, welche ein Passieren zwischen benachbarten Führungsrohren gestattet, zwei symmetrische Positionen einnehmen kann, welche das Schweissen zweier Führungsrohre ohne Translationsbewegung der Schweisszange gestatten.

5. Vorrichtung nach einem der vorhergehenden Ansprüche, dadurch gekennzeichnet, dass sie Einrichtungen zum Einführen verlängerbare Drehspindeln in die Führungsrohre umfasst, um diese wenigstens lokal im Bereich des Schweissvorganges abzustützen.

6. Vorrichtung nach Anspruch 5, dadurch gekennzeichnet, dass die den Drehspindeln zugeordneten Einrichtungen Schläuche (47) oder Stangen (77) zur Verlagerung der Drehspindeln längs der Führungsrohre und Einrichtungen zur schrittweisen Vorwärtsbewegung dieser Schläuche oder Stangen umfasst.

7. Vorrichtung nach einem der vorhergehenden Ansprüche, dadurch gekennzeichnet, dass sie eine Bank (7) zur Aufnahme eines Vorpositionierungswerkzeuges (11) für die Führungsrohre und Strukturelemente umfasst, wobei das Werkzeug bewegliche, aufklappbare Flansche (9, 10) umfasst, welche über Verbindungsstangen (8) derart verbunden sind, dass sie eine transportable Blockeinrichtung auf dem Gestell (12) bilden.

8. Vorrichtung nach einem der vorhergehenden Ansprüche, dadurch gekennzeichnet, dass die Schweisszange oder jede Schweisszange (28) zwei rohrförmige, koaxiale Arme (31, 32) trägt, welche jeweils mit Elektroden (34, 33) versehen sind, wobei diese einander gegenüber angeordnet sind, wobei der eine Arm auf dem Schlitten mittels elastischer Rückholeinrichtungen befestigt ist, welche eine axiale Verlagerung ausgehend von einer Ruhestellung gestatten, und Einrichtungen (29) zur axialen Verlagerung der Arme relativ zueinander, so dass die Elektroden im Gleichgewichtszustand an dem jeweiligen Führungsrohr anliegen.

9. Verfahren zum Schweissen von Führungsrohren (3) einer Anordnung von Brennstäben in längs der Führungsrohre angeordneten Strukturelementen (4), dadurch gekennzeichnet, dass man die durch die Führungsrohre und die Strukturelemente gebildete Anordnung mittels eines Werkzeuges auf einem Gestell (12) vormontiert, dass man wenigstens eine Zange quer bezüglich der Führungsrohre so ausgerichtet bewegt, dass sie zwischen zwei benachbarten Rohren passieren kann, dass die Schweisszangen um eine Achse parallel zu dieser Querverlagerung geschwenkt werden und an dem Führungsrohr zur Anlage kommen, an welchem eine Schweissung vorgenommen werden soll, dass die Zange geschlossen wird, und dass so ein elektrischer Schweissimpuls angelegt wird, dass die Zange anschliessend wieder geschwenkt wird bis sie ihre ursprüngliche Position wieder einnimmt und dass der Vorgang anschliessend an einem anderen Führungsrohr wiederholt wird.

## Claims

1. Device for welding guide tubes of a fuel assembly to structural elements distributed along the guide tubes, characterized in taht it comprises: a stand (12) for receiving the unit consisting of the guide tubes (3) and the structural elements (4) and for maintaining them in the arrangement wherein they must be welded; at least one welding unit (22–25) comprising a carriage (17) for moving it on the stand in a direction prallel to the guide tubes and comprising at least one welding grip (28) located on the carriage through means for moving the welding grip in a direction perpendicular to the guiding tubes and for totating it about an axis parallel to the perpendicular direction between an angular position, wherein the grip may be inserted between two adjacent rows of guide tubes and an angular position wherein the grip straddles a tube at the location of a welding to be carried out; and means for applying electrical welding pulses to the grips.

2. Device according to claim 1, for welding guide tubes distributed in rows along two perpendicular directions, characterized in that each welding grip (28) is borne by its carriage through a table (26) with cross movements along the direction of said rows.

3. Device according to claim 1, characterized in that it has four welding grips (28) borne by a same carriage (17) by means of tables with respective cross movements.

4. Device according to any one of the preceding claims, characterized in that the means for rotating the welding grip (28) are provided to bring the latter, from the orientation wherein it passes between adjacent rows, into two symmetrical orientations enabling welding two guide tubes without rectilinear movement of said grip.

5. Device according to any one of the preceding claims, characterized in that it further comprises means for introducing, into said guide tubes (3), expandable mandrels at least locally to support the guide tube at the welding locations.

6. Defice according to claim 5, characterized in that the means associated with the mandrels comprise flexible elements (47) or rods (77) for moving the mandrels along the guide tubes and step-by-step advancing means for said flexible elements or rods.

7. Device according to any one of the preceding claims, characterized in that it further comprises a bench (7) for a tooling (11) for pre-positioning the guide tubes and structural elements, said tooling comprising tilting movable clamps (9, 10) connected by bracing rods so as to constitute an assembly transportable as a unit on the stand (12).

8. Device according to any one of the preceding claims, characterized in that the welding grip or each welding grip (28) comprises two coaxial tubular arms (31, 32), provided with respective electrodes (34, 33) placed face to face, one of the arms being mounted on the carriage via resilient return means enabling it to move axially from a rest position and means (29) for moving the arms axially with respect to one another and applying said electrodes in a balanced manner to said tube.

9. Method of welding guide tubes (3) of a nuclear fuel assembly to structural elements (4) distributed along the guide tube, characterized by the steps of mounting the set of guide tubes and structural elements, pre-assembled by a tooling, on a stand (12) moving at least one grip transversely to the direction of the guide tubes, while holding it in an orientation in which it can pass between two adjacent guide tubes; rotating the grip about an axis parallel to the direction of traverse movement to bring it into engagement on the guide tube at the location of a proposed weld; closing the grip and sending an electrical welding pulse therein; rotating the grip back to its original orientation; and beginning the sequence again on another guide tube.

1/8

Fig.1.

# FIG.2.

# FIG.3.

3 / 8

# FIG.4.

0 105 779

FIG. 5.

FIG. 6.

FIG. 7.

5 | 8

# FIG.8.

618

# FIG.9.

7/8

## FIG.10a.

## FIG.10b.

FIG.11.